# EUROPEAN PATENT APPLICATION

(11) **EP 2 023 174 A1**
(43) Date of publication of application: **11.02.2009**
(21) Application number: 08012779.8
(22) Date of filing: 15.07.2008
(51) Int. Cl.: G02B 6/42, G02B 6/122

(54) **Optical waveguide device and manufacturing method thereof**

(30) Priority: 23.07.2007 JP 2007191071
(71) Applicant: Nitto Denko Corporation, Ibaraki-shi, Osaka 567-8680 (JP)
(72) Inventor: Hikita, Takami, Ibaraki-shi Osaka 567-8680 (JP); Mune, Kazunori, Ibaraki-shi Osaka 567-8680 (JP)
(74) Representative: Kuhnen & Wacker

(57) **Abstract**

An optical waveguide device including a substrate (1); a light emitting element (5) provided on a light emitting element provision region of an upper surface of the substrate (1); an under-cladding layer (2) provided on a portion of the upper surface of the substrate (1) except for the light emitting element provision region; and a core (3) covering the light emitting element (5) and the under-cladding layer (2) on the substrate (1), and serving as a path of light emitted from the light emitting element (5). An optical waveguide device manufacturing method including the steps of: forming an under-cladding layer (2) on a portion of an upper surface of a substrate (1) except for the light emitting element provision region; placing a light emitting element (5) on the light emitting element provision region; and forming a core (3) on the resultant substrate (1) to cover the light emitting element (5) and the under-cladding layer (2).

## Description

### BACKGROUND OF THE INVENTION

### Field of the Invention

The present invention relates to an optical waveguide device which is widely used for optical communications, optical information processing and other general optics, and to a method of manufacturing the optical waveguide device.

### Description of the Related Art

In general, optical waveguide devices are configured such that light emitted from a light emitting element is transmitted through an optical waveguide (see, for example, U.S. 5,914,709). Such an optical waveguide device is schematically illustrated in Fig. 5. In Fig. 5, the optical waveguide device includes an optical waveguide including an under-cladding layer 20, a core 30 and an over-cladding layer 40 provided on a substrate 10. A light emitting element 50 is fixed to the substrate 10 by an adhesive A and is spaced from one end of the optical waveguide. A light beam L from the light emitting element 50 is incident on one end face of the core 30 of the optical waveguide, then transmitted through the core 30, and outputted from the other end face of the core 30.

In the optical waveguide device, however, the adhesive A is liable to protrude to interfere with an optical path when the light emitting element 50 is pressed from the above for bonding thereof.

### SUMMARY OF THE INVENTION

In view of the foregoing, it is an object of the present invention to provide an optical waveguide device which is free from interference with an optical path between a light emitting element and an optical waveguide thereof and to provide a method of manufacturing the optical waveguide device based on an idea different from the related art.

According to a first aspect of the present invention to achieve the aforementioned object, there is provided an optical waveguide device, which comprises: a substrate; a light emitting element provided on a light emitting element provision region of an upper surface of the substrate; an under-cladding layer provided on a portion of the upper surface of the substrate except for the light emitting element provision region; and a core covering the light emitting element and the under-cladding layer on the substrate, the core serving as a path of light emitted from the light emitting element.

According to a second aspect of the present invention, there is provided an optical waveguide device manufacturing method, which comprises the steps of: forming an under-cladding layer on a portion of an upper surface of a substrate except for a light emitting element provision region; placing a light emitting element on the light emitting element provision region; and forming a core on the resultant substrate to cover the light emitting element and the under-cladding layer, the core serving as a path of light emitted from the light emitting element.

The inventors of the present invention conducted studies on the construction of the optical waveguide device to eliminate the interference with the light path between the light emitting element and the optical waveguide in the optical waveguide device. In the course of the studies, the inventors came up with an idea of fixing a light emitting element by covering the light emitting element with a core serving as a path of light emitted from the light emitting element and inputting the light directly into the core from the light emitting element unlike in the related art, and attained the present invention.

In the inventive optical waveguide device, the light emitting element and the under-cladding layer are separately provided on the upper surface of the substrate, and the core covers the light emitting element and the under-cladding layer on the substrate. Therefore, the light emitting element is held and fixed between the substrate and the core. This obviates the use of an adhesive for the fixing of the light emitting element, or eliminates the possibility of protrusion of the adhesive from the periphery of the light emitting element if a very small amount of the adhesive is used for tentatively fixing the light emitting element on the upper surface of the substrate prior to the formation of the core. The inventive optical waveguide device ensures proper light transmission between the light emitting element and the core without the possibility that the adhesive interferes with the optical path. Further, the light emitted from the light emitting element is directly inputted to the core, so that the light is more reliably inputted and transmitted as compared with the related art in which the light is inputted to the core from the light emitting element spaced from the one end face of the core.

Particularly, a reflection surface may be provided in a portion of the core associated with the light emitting element for deflecting the light emitted from the light emitting element along the light path. In this case, the light emitted from the light emitting element is reflected on the reflection surface, whereby the light is efficiently deflected along the light path in the core. Thus, the light transmission efficiency is improved.

The reflection surface may be defined by a bottom surface of a generally V-shaped bottom of a recess provided in a surface of the core and inclined at an angle of 45 degrees with respect to a bottom surface of the core. Further, the light emitted from the light emitting element may be projected toward the reflection surface at an angle of 45 degrees. In this case, the light is efficiently deflected at 90 degrees.

In the inventive optical waveguide device manufacturing method, the under-cladding layer is formed on the portion of the upper surface of the substrate except for the light emitting element provision region, and then the light emitting element is placed on the light emitting element provision region. Thereafter, the core is formed on the resultant substrate to cover the light emitting element and the under-cladding layer. Thus, the inventive optical waveguide device is provided, which ensures proper light transmission between the light emitting element and the core, and highly reliable light input and light transmission.

Particularly, the method may further comprise the step of forming a reflection surface in a portion of the core associated with the light emitting element, the reflection surface serving to deflect the light emitted from the light emitting element along the light path. In this case, the light emitted from the light emitting element is reflected on the reflection surface, whereby the light is efficiently deflected along the light path in the core. Thus, the optical waveguide device is provided as having an improved light transmission efficiency.

The reflection surface forming step may include the step of forming a recess having a generally V-shaped bottom in a surface of the core and defining the reflection surface by a bottom surface of the bottom of the recess inclined at an angle of 45 degrees with respect to a bottom surface of the core, the reflection surface being positioned so that the light emitted from the light emitting element is projected toward the reflection surface at an angle of 45 degrees. In this case, the optical waveguide device is provided, in which the light is efficiently deflected at 90 degrees.

Further, the recess forming step may include the step of cutting a part of the core along a light projection axis of the light emitting element. In this case, a blade to be used for the cutting can be easily positioned. This makes it possible to accurately and easily form the reflection surface in position.

### BRIEF DESCRIPTION OF THE DRAWINGS

Figs. 1(a) and 1(b) are a plan view and a sectional view taken along a line X-X in Fig. 1(a), respectively, which schematically illustrate an optical waveguide device according to one embodiment of the present invention;
Figs. 2(a) to 2(e) are explanatory diagrams schematically showing an optical waveguide device manufacturing method according to the present invention;
Fig. 3 is an explanatory diagram schematically showing a modification of the optical waveguide device manufacturing method;
Fig. 4 is an explanatory diagram schematically illustrating a modification of the optical waveguide device; and
Fig. 5 is a sectional view schematically illustrating a related art optical waveguide device.

### DESCRIPTION OF THE PREFERRED EMBODIMENTS

Embodiments of the present invention will hereinafter be described in detail with reference to the attached drawings.

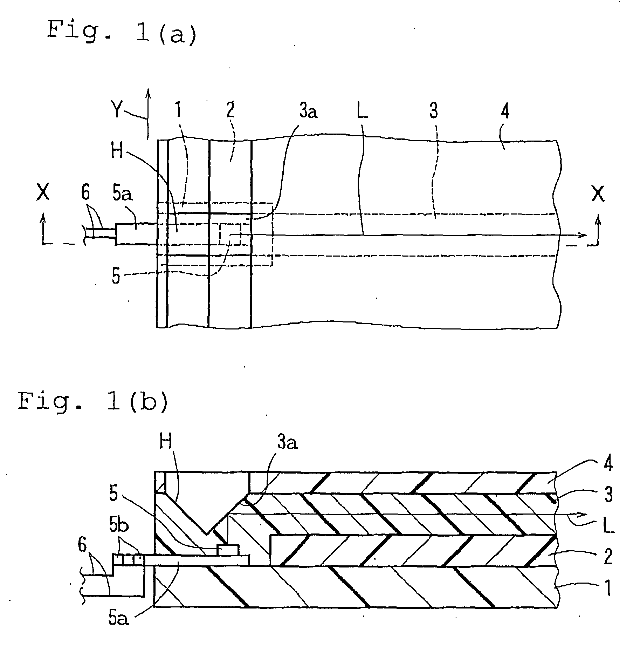

Figs. 1(a) and 1(b) illustrate an optical waveguide device according to one embodiment of the present invention. The optical waveguide device according to this embodiment includes a light emitting element 5 provided on one end portion (a left end portion in Figs. 1(a) and 1(b)) of an upper surface of a substrate 1 and arranged to project a light beam L upward, an under-cladding layer 2 provided on a portion of the upper surface of the substrate 1 except for a light emitting element provision region in which the light emitting element 5 is provided, and a core 3 of a predetermined pattern covering the light emitting element 5 and the under-cladding layer 2 and serving as a path of the light beam projected from the light emitting element 5. In this embodiment, an over-cladding layer 4 is provided as covering the core 3. Further, an elongated groove (recess) H having a V-shaped bottom is provided just above the light emitting element 5 as extending in a direction perpendicular to (a longitudinal axis of) the light path in the core 3 (as indicated by an arrow Y in Fig. 1(a)) with an edge of the V-shaped bottom thereof extending in the perpendicular direction. The bottom of the elongated groove H has two inclined surfaces positioned in a portion of the core 3 as shown in Fig. 1(b). One of the two inclined surfaces of the V-shaped bottom of the elongated groove H located on the side of the light path (a right inclined surface in Fig. 1(b)) is positioned just above the light emitting element 5 (with respect to a light projection direction), and serves as a reflection surface 3a which reflects the light beam L from the light emitting element 5. The reflection surface 3a has an angle of 45 degrees with respect to a bottom surface of the core 3. In Figs. 1(a) and 1(b), a reference character 5a denotes a lead frame having one end portion on which the light emitting element 5 is fixed, and the other end portion provided with terminals (wiring connection portions) 5b connected to the light emitting element 5. In this embodiment, the terminals 5b are located outside the substrate 1.

The light beam L projected upward from the light emitting element 5 is inputted directly into the core 3 from the bottom surface of the core 3, and reflected on the reflection surface 3a at an angle of 45 degrees. Thus, the light beam is deflected along the light path in the core 3, then travels along the light path in the core 3, and is outputted from an end face of the core 3 opposite from the reflection surface 3a.

Next, an exemplary optical waveguide device manufacturing method will be described.

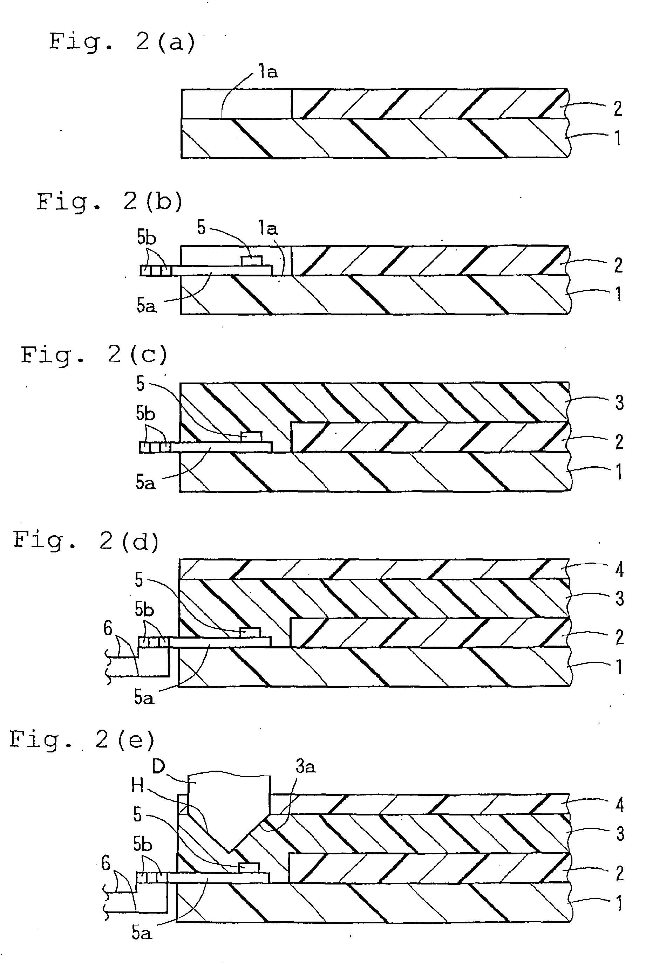

First, a planar substrate 1 (see Fig. 2 (a)) is first prepared. The substrate 1 is not particularly limited, but exemplary materials for the substrate 1 include glass, quartz, silicone, resins and metals. The thickness of the substrate 1 is not particularly limited, but is typically in the range of 20 µm to 5 mm.

In turn, as shown in Fig. 2(a), an under-cladding layer 2 is formed in a predetermined portion of an upper surface of the substrate 1 except for a light emitting element provision region 1a in which the light emitting element 5 (see Fig. 2(b)) is to be placed. Typical examples of a material for the formation of the under-cladding layer 2 include photosensitive resins. The formation of the under-cladding layer 2 is achieved in the following manner. A varnish prepared by dissolving any of the aforementioned resins in a solvent is applied on the substrate 1. The application of the varnish is achieved, for example, by a spin coating method, a dipping method, a casting method, an injection method, an ink jet method or the like. Then, the varnish is dried by a heat treatment at 50°C to 120°C for 10 to 30 minutes. Thus, an uncured photosensitive resin layer is formed for the under-cladding layer 2.

Subsequently, an exposure mask having such a pattern as to mask the light emitting element provision region 1a (see Fig. 2(b)) is placed above the uncured photosensitive resin layer, which is in turn exposed to radiation via the exposure mask. Thus, an exposed portion of the photosensitive resin layer is cured. The pattern of the exposure mask includes a mask portion configured according to the number of light emitting elements 5 to be provided in the optical waveguide device. Examples of the radiation for the exposure include visible light, ultraviolet radiation, infrared radiation, X-rays, α-rays, β-rays and γ-rays. Preferably, the ultraviolet radiation is used. The use of the ultraviolet radiation permits irradiation at a higher energy to provide a higher curing speed. In addition, a less expensive smaller-size irradiation apparatus can be employed, thereby reducing production costs. Examples of a light source for the ultraviolet radiation include a low-pressure mercury-vapor lamp, a high-pressure mercury-vapor lamp and an ultra-high-pressure mercury-vapor lamp. The dose of the ultraviolet radiation is typically 10 mJ/cm² to 10000 mJ/cm², preferably 50 mJ/cm² to 3000 mJ/cm².

After the exposure, a heat treatment is performed to complete a photoreaction. The heat treatment is performed at 80°C to 250°C, preferably at 100°C to 200°C, for 10 seconds to two hours, preferably for five minutes to one hour.

In turn, a development process is performed by using a developing agent to dissolve away an unexposed (uncured) portion of the photosensitive resin layer. Thus, the remaining portion (cured portion) of the photosensitive resin layer has a window on the light emitting element provision region 1a. Exemplary methods for the development include an immersion method, a spray method and a puddle method. Examples of the developing agent include an organic solvent and an organic solvent containing an alkaline aqueous solution. The developing agent and conditions for the development are properly selected depending on the composition of the photosensitive resin.

After the development, the developing agent remaining in the photosensitive resin layer is removed by a heat treatment. The heat treatment is typically performed at 80°C to 120°C for 10 to 30 minutes. The resultant photosensitive resin layer serves as the under-cladding layer 2. The thickness of the under-cladding layer 2 is typically in the range of 5 µm to 50 µm.

Then, as shown in Fig. 2(b), the light emitting element 5 is placed together with a lead frame 5a on the light emitting element provision region (window) 1a defined by the window formed in the photosensitive resin layer and remaining as it is in the under-cladding layer 2. At this time, terminals (wiring connection portions) 5b provided on an end portion of the lead frame 5a opposite from the light emitting element 5 are positioned outward of an edge of the substrate 1. The placement of the light emitting element 5 may be achieved without the use of an adhesive or with the use of a very small amount of the adhesive for tentative fixing of the light emitting element 5. Since the light emitting element 5 is fixed by a core 3 to be formed in the subsequent step (see Fig. 2(c)), no adhesive or a very small amount of the adhesive is used for the tentative fixing. Typically employed as the light emitting element 5 is a light emitting diode, a laser diode, a VCSEL (Vertical Cavity Surface Emitting Laser) or the like.

The formation of the core 3 is achieved in the same manner as the formation of the under-cladding layer 2 described with reference to Fig. 2(a). That is, a photosensitive resin layer for the core 3 (see Fig. 2(c)) is formed on the resultant substrate 1 to cover the light emitting element 5 and the under-cladding layer 2, and then subjected to the exposure, the heat treatment and the development. Thus, the core 3 is formed as shown in Fig. 2(c). A material for the formation of the core 3 is a material which has a greater refractive index than the material for the formation of the under-cladding layer 2 and a material for formation of an over-cladding layer 4 (see Fig. 2(d)) described later. The refractive index may be adjusted, for example, by selection of the types of the materials for the formation of the under-cladding layer 2, the core 3 and the over-cladding layer 4 and adjustment of the composition ratio thereof. The core 3 typically has a thickness of 5 µm to 50 µm (as measured on the under-cladding layer 2) and a width of 5 µm to 50 µm.

Then, as shown in Fig. 2(d), an over-cladding layer 4 is formed on the resultant substrate 1 to cover the under-cladding layer 2 and the core 3. Examples of a material for the formation of the over-cladding layer 4 include those employed as the material for the under-cladding layer 2. The material for the over-cladding layer 4 may be the same as or different from the material for the under-cladding layer 2. The formation of the over-cladding layer 4 is achieved in the same manner as the formation of the under-cladding layer 2. The thickness of the over-cladding layer 4 (as measured on the under-cladding layer 2) is typically in the range of 20µm to 100 µm.

Further, the terminals (wiring connection portions) 5b of the light emitting element 5 are respectively connected to wirings 6 by a wire bonding method or the like.

Then, as shown in Fig. 2(e), a disk-shaped rotary blade D having an edge angle of 90 degrees (a V-shaped edge) is rotated with its rotation axis being parallel to (the longitudinal axis of) the optical path of the core 3, and the edge of the rotary blade D is moved down from above a portion of the over-cladding layer 4 associated with the light emitting element 5 to a middle of the thickness of the core 3 and, in this state, slid perpendicularly to (the longitudinal axis of) the light path of the core 3. Thus, an elongated groove H is formed as extending through the over-cladding layer 4 into the core 3, whereby a V-shaped bottom of the elongated groove H formed by cutting with the edge of the rotary blade D is defined in the core 3. One of two inclined surfaces of the V-shaped bottom located on the side of the light path in the core 3 serves as a reflection surface 3a which reflects the light beam L from the light emitting element 5 (see Fig. 1(b)).

Thus, the optical waveguide device (see Figs. 1(a) and 1(b)) is produced, which includes the substrate 1, the light emitting element 5, and the optical waveguide formed by stacking the under-cladding layer 2, the core 3 and the over-cladding layer 4.

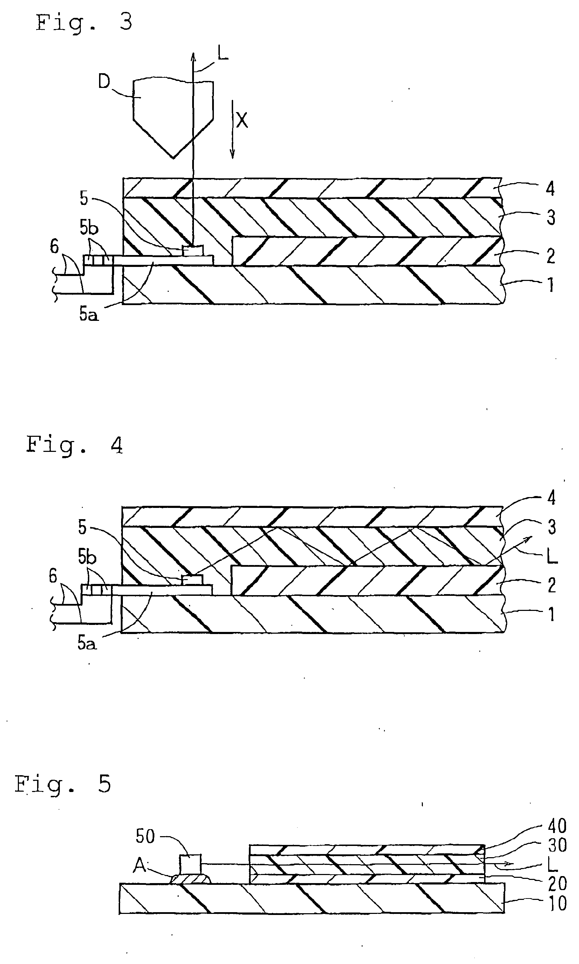

In the embodiment described above, when a part of the core 3 is cut to form the reflection surface (inclined surface) 3a, the light beam L may be projected upward from the light emitting element 5 as shown in Fig. 3, and the projected light may be employed as a reference. The rotary blade D may be moved down in a direction indicated by an arrow X along the light projection axis (with a rotating surface of the rotary blade D being oriented along the light projection axis). For the cutting, the rotary blade D is positioned so that a generally middle portion of the inclined surface 3a to be formed intersects the light projection axis (in Fig. 3, a widthwise center of the rotary blade D is illustrated as being offset to the left side from the light projection axis). By employing the projected light as the reference, the positioning of the rotary blade D for the cutting is facilitated, so that the reflection surface 3a can be more accurately and easily formed in position.

In the embodiment described above, the light beam is projected upward from the light emitting element 5, and the inclined surface (reflection surface 3a) is formed in the part of the core 3 as having an angle of 45 degrees and positioned just above the light emitting element 5. However, this arrangement is not limitative. For example, as shown in Fig. 4, the light beam L may be projected obliquely upward from the light emitting element 5 without the provision of the inclined surface in the part of the core 3 (see Fig. 1(b)). That is, the light emitting element 5 is covered with the core 3 in an optical waveguide device shown in Fig. 4, so that the light beam L projected obliquely upward from the light emitting element 5 is directly inputted into the core 3 from the bottom surface of the core 3, and repeatedly reflected in the core 3 to travel along the light path in the core 3 (longitudinally of the core 3). Where the inclined surface (reflection surface 3a) is provided, the inclination angle is not particularly limited as long as the light beam projected from the light emitting element 5 is deflected along the light path in the core 3. The angle defined between the inclined surface (reflection angle 3a) and the bottom surface of the core 3 may be an angle other than 45 degrees (e.g., in the range of 10 degrees to 80 degrees).

The over-cladding layer 4 is provided in the embodiments described above (see Figs. 1(a), 1(b) and 4), but the over-cladding layer 4 is not essential. The optical waveguide device may be configured without the provision of the over-cladding layer 4.

Next, an inventive example will be described. However, the present invention is not limited to this example.

### EXAMPLE

### Material for Formation of Under-Cladding Layer and Over-Cladding Layer

A material for formation of an under-cladding layer and an over-cladding layer was prepared by mixing 35 parts by weight of bisphenoxy ethanol fluorene diglycidyl ether
(Component A), 40 parts by weight of 3',4'-Epoxycyclohexylmethyl-3,4-Epoxycyclohexane carboxylate which is an alicyclic epoxy resin (CELLOXIDE 2021P manufactured by Daicel Chemical Industries, Ltd.)
(component B), 25 parts by weight of (3',4'-Epoxycyclohexane)methyl-3',4'-Epoxycyclohexyl-carboxylate (CELLOXIDE 2081 manufactured by Daicel Chemical Industries, Ltd.)
(component C), and 1 part by weight of a 50% propione carbonate solution of 4,4'-bis[di(β-hydroxyethoxy)phenylsulfinio]phenylsulfide bishexa fluoro antimonate (photoacid generator, Component D).

### Material for Formation of Core

A material for formation of a core was prepared by dissolving 70 parts by weight of the aforementioned component A, 30 parts by weight of 1,3,3-tris{4-[2-(3-oxetanyl)]butoxyphenyl}butane and 0.5 part by weight of the aforementioned component D in 28 parts by weight of ethyl lactate.

### Production of Optical Waveguide Device

The under-cladding layer material was applied on an upper surface of a glass substrate (having a thickness of 1.0 mm) by a spin coating method, and then dried at 100°C for 15 minutes to form a photosensitive resin layer. In turn, the photosensitive resin layer was exposed to ultraviolet radiation at 2000 mJ/cm² via a synthetic quartz exposure mask formed with an opening pattern conformal to an under-cladding layer pattern, and then a heat treatment was performed at 150°C for 60 minutes. Subsequently, a development process was performed by using a γ-butyrolactone aqueous solution to dissolve away an unexposed portion, and then a heat treatment was performed at 100°C for 15 minutes, whereby an under-cladding layer (having a thickness of 25 µm) was formed on a predetermined portion of the upper surface of the glass substrate except for a light emitting element provision region.

Next, a light emitting diode was tentatively fixed to the light emitting element provision region of the upper surface of the glass substrate with the use of a very small amount of a UV-curable adhesive.

Then, the core material was applied on the resultant glass substrate to cover the light emitting element and the under-cladding layer by a spin coating method, and then dried at 100°C for 15 minutes. Thus, a photosensitive resin layer was formed. In turn, a synthetic quartz exposure mask formed with an opening pattern conformal to a core pattern was positioned above the photosensitive resin layer. After the photosensitive resin layer was exposed to ultraviolet radiation at 4000 mJ/cm² from above the mask by a contact exposure method, a heat treatment was performed at 120°C for 15 minutes. Then, a development process was performed by using a γ-butyrolactone aqueous solution to dissolve away an unexposed portion, and then a heat treatment was performed at 120°C for 30 minutes. Thus, a core (having a thickness of 50 µm and a width of 50 µm) was formed.

In turn, the over-cladding layer material was applied on the resultant glass substrate to cover the core and the under-cladding layer by a spin coating method, and then dried at 100°C for 15 minutes. Thus, a photosensitive resin layer was formed. In turn, a synthetic quartz exposure mask formed with an opening pattern conformal to an over-cladding layer pattern was positioned above the photosensitive resin layer. After the photosensitive resin layer was exposed to ultraviolet radiation at 2000 mJ/cm² from above the mask by a contact exposure method, a heat treatment was performed at 150°C for 60 minutes. Subsequently, a development process was performed by using a γ-butyrolactone aqueous solution to dissolve away an unexposed portion, and then a heat treatment was performed at 100°C for 15 minutes. Thus, an over-cladding layer (having a thickness of 25 µm) was formed.

Then, wirings were respectively connected to terminals of the light emitting diode by a wire bonding method.

Subsequently, light was projected upward from the light emitting diode and, in this state, a rotary blade having an edge angle of 90 degrees was moved down from above the over-cladding layer along a light projection axis by means of a dicing machine (Mode1 522 available from Disco Corporation) to cut a part of the core. Thus, a surface inclined at an angle of 45 degrees with respect to a bottom surface of the core was formed in a portion of the core.

In this manner, an optical waveguide device including the substrate, the light emitting element, and an optical waveguide formed by stacking the under-cladding layer, the core and the over-cladding layer was produced.

Although specific forms of embodiments of the instant invention have been described above and illustrated in the accompanying drawings in order to be more clearly understood, the above description is made by way of examples and not as a limitation to the scope of the instant invention. It is contemplated that various modifications apparent to one of ordinary skill in the art could be made without departing from the scope of the invention which is to be determined by the following claims.

## Claims

1. An optical waveguide device comprising:
a substrate;
a light emitting element provided on a light emitting element provision region of an upper surface of said substrate;
an under-cladding layer provided on a portion of the upper surface of the substrate except for said light emitting element provision region; and
a core covering said light emitting element and said under-cladding layer on the substrate, the core serving as a path of light emitted from the light emitting element.

2. An optical waveguide device as set forth in claim 1, wherein a reflection surface is provided in a portion of said core associated with said light emitting element for deflecting the light emitted from the light emitting element along the light path.

3. An optical waveguide device as set forth in claim 2,
wherein said reflection surface is defined by a bottom surface of a generally V-shaped bottom of a recess provided in a surface of said core and inclined at an angle of 45 degrees with respect to a bottom surface of the core,
wherein the light emitted from said light emitting element is projected toward the reflection surface at an angle of 45 degrees.

4. An optical waveguide device manufacturing method comprising the steps of:
forming an under-cladding layer on a portion of an upper surface of a substrate except for a light emitting element provision region;
placing a light emitting element on said light emitting element provision region; and
forming a core on the resultant substrate to cover said light emitting element and said under-cladding layer, said core serving as a path of light emitted from the light emitting element.

5. An optical waveguide device manufacturing method as set forth in claim 4, further comprising the step of forming a reflection surface in a portion of said core associated with said light emitting element, said reflection surface serving to deflect the light emitted from the light emitting element along the light path.

6. An optical waveguide device manufacturing method as set forth in claim 5,
wherein said reflection surface forming step includes the step of forming a recess having a generally V-shaped bottom in a surface of said core and defining said reflection surface by a bottom surface of the bottom of said recess inclined at an angle of 45 degrees with respect to a bottom surface of the core, said reflection surface being positioned so that the light emitted from the light emitting element is projected toward the reflection surface at an angle of 45 degrees.

7. An optical waveguide device manufacturing method as set forth in claim 6, wherein said recess forming step includes the step of cutting a part of the core along a light projection axis of the light emitting element.
